# EUROPEAN PATENT APPLICATION

(11) **EP 4 848 120 A1**
(43) Date of publication of application: **02.12.2026**
(21) Application number: 25178777.6
(22) Date of filing: 26.05.2025
(51) Int. Cl.: G06F 21/55, G06N 3/042, G06N 5/022, G06Q 10/0635

(54) **ENFORCING BUSINESS POLICY-DRIVEN DATA BOUNDARIES WITHIN AN INDUSTRIAL AUTOMATION ENVIRONMENT**

(71) Applicant: Siemens Aktiengesellschaft, 80333 München (DE)
(72) Inventor: Manapragada, Shyam Sundar, 560075 Bangalore (IN); Tanna, Jemin, 560068 Bangalore, Karnataka (IN); Upadhyay, Saurabh, 560067 Bangalore Rural, Karnataka, (IN); Mutharaju, Rakesh, 560024 Bangalore, Karnataka (IN); Saqib, Mohammad, 560100 Bengaluru, Karnataka (IN); Kashyap, Shreyan, 121008 Faridabad, Haryana (IN)
(74) Representative: Isarpatent

(57) **Abstract**

A computer-implemented method for enforcing business policy-driven data boundaries within an industrial automation environment (100) is provided. The method comprises receiving a plurality of business policy documents and a plurality of data transmission logs from a plurality of industrial automation components (108A-N). An immutable data path is generated by applying distributed ledger technology to the data transmission logs, with the immutable data path merged into the knowledge graph as tamper-evident provenance information. A generative adversarial network model uses the knowledge graph and the immutable data path as input to generate synthetic dataflow representations and to detect policy violations according to one or more business policy boundaries. Transmission of at least one live data stream across an industrial automation boundary is controlled by applying an output from the generative adversarial network model.

## Description

The present disclosure relates to the field of industrial data governance, and more particularly relates to a method and system of enforcing business policy-driven data boundaries within an industrial automation environment.

A smart factory such as an automated beverage-bottling plant includes numerous industrial controllers, sensors, and gateways that continually exchange operational data with enterprise and cloud systems. Many of these data exchanges must respect corporate confidentiality levels, safety regulations, and contractual obligations that are expressed as business policies authored in natural language documents.

To uphold such policies, each sensor tag, protocol endpoint, and data transformation must be accurately mapped back to the governing clause-for example, a freezer-temperature tag must be treated as "restricted" if the policy labels it "confidential process data." Conventional practice still uses spreadsheets and manual rule entry, which is labor-intensive and fragile when equipment, tags, or policies change.

Traditional firewalls and static whitelist configurations operate only at protocol or port level and cannot reconcile the semantics of business rules with the fine-grained context of machine tags. As a result, covert relabeling of data, cross-layer leaks, or multi-protocol attack paths can go undetected until after sensitive information has crossed the plant boundary.

Audit requirements add further complexity because incident investigators need tamper-proof evidence linking every policy clause to each real data movement. Existing logging servers are centralized and thus vulnerable to manipulation, providing little assurance to regulators or customers demanding immutable provenance.

Furthermore, once an initial ruleset is deployed, evolving threats and process modifications quickly render static models obsolete. Operators receive floods of false positives while genuine, novel violations slip through, creating alert fatigue and security blind spots. There is therefore a pressing need to automate semantic policy translation, real-time detection, and adaptive enforcement across heterogeneous operational-technology networks.

Thus, it is an object of the present disclosure to provide a method and system for enforcing business policy-driven data boundaries within an industrial automation environment.

The object of the present disclosure is achieved by a method of enforcing business policy-driven data boundaries within an industrial automation environment. The method comprises receiving a plurality of business policy documents and a plurality of data transmission logs from a plurality of industrial automation components. The method further comprises generating a knowledge graph by applying a natural language processing model to the plurality of business policy documents and mapping policy terms to technical tags, wherein the knowledge graph comprises a plurality of nodes and edges representing a plurality of policy elements, a plurality of machine tags, and a plurality of protocol endpoints.

The method further comprises applying a synonym mapping between a plurality of business ontology nodes in the knowledge graph and a plurality of machine tag nodes to determine at least one cross-layer policy relationship for enhanced violation detection. The method further comprises generating an immutable data path by applying a distributed ledger technology to the plurality of data transmission logs, wherein the immutable data path is merged into the knowledge graph as tamper-evident provenance information. The method further comprises applying a generative adversarial network model using the knowledge graph and the immutable data path as input to generate a plurality of synthetic data-flow representations and to detect at least one policy violation according to one or more business policy boundaries.

The method further comprises detecting a plurality of field-level anomalies in the plurality of synthetic data-flow representations by applying a convolutional neural network layer within the generative adversarial network model. The method further comprises detecting at least one sequence-level transformation in the plurality of synthetic data-flow representations by applying a recurrent neural network layer within the generative adversarial network model. The method further comprises controlling transmission of at least one live data stream across an industrial automation boundary by applying an output from the generative adversarial network model, such that only data conforming to the one or more business policy boundaries is transmitted.

The method further comprises outputting a visualization of at least one of the knowledge graph, the immutable data path, or the at least one detected policy violation to a human-machine interface. The method further comprises transmitting an indication of the at least one detected policy violation and the associated immutable data path to at least one external compliance system for archiving or enforcement. The method further comprises synchronizing the at least one detected policy violation with at least one industrial gateway controller to control at least one physical data egress operation at the respective industrial automation boundary.

The method further comprises receiving a user feedback regarding the at least one detected policy violation and modifying at least one parameter of the generative adversarial network model responsive to the received user feedback.

The object of the present disclosure is further achieved by a system of enforcing business policy-driven data boundaries within an industrial automation environment. The system comprises a data ingestion component configured to receive a plurality of business policy documents and a plurality of data transmission logs from a plurality of industrial automation components. The system further comprises a knowledge graph engine configured to generate a knowledge graph comprising a plurality of nodes representing a plurality of policy elements, a plurality of machine tags, and a plurality of protocol endpoints by applying a natural language processing model to the received plurality of business policy documents and mapping policy terms to technical tags.

The system further comprises a synonym mapping component configured to apply the synonym mapping between the plurality of business ontology nodes in the knowledge graph and the plurality of machine tag nodes to determine at least one cross-layer policy relationship. The system further comprises an immutable data path generator configured to apply the distributed ledger technology to the received plurality of data transmission logs, wherein the immutable data path is merged within the knowledge graph as tamper-evident provenance information. The system further comprises a compliance module comprising a generative adversarial network configured to receive the knowledge graph and the immutable data path as input, to generate a plurality of synthetic data-flow representations, and to detect at least one policy violation according to the one or more business policy boundaries.

The compliance module further comprises the convolutional neural network layer configured to detect the plurality of field-level anomalies in the plurality of synthetic data-flow representations. The compliance module further comprises the recurrent neural network layer configured to detect the at least one sequence-level transformation in the plurality of synthetic data-flow representations. The system further comprises a monitoring engine configured to control transmission of the at least one live data stream across the industrial automation boundary by applying the output from the compliance module, such that only data conforming to the one or more business policy boundaries is transmitted.

The system further comprises a visualization interface configured to display at least one of the knowledge graph, the immutable data path, or the at least one detected policy violation to a human operator. The system further comprises a network interface configured to transmit the indication of the at least one detected policy violation and the associated immutable data path to the at least one external compliance system. The system further comprises the industrial gateway controller configured to synchronize with the monitoring engine to control the at least one physical data egress operation at the industrial automation boundary, responsive to the at least one detected policy violation.

The system further comprises a feedback unit configured to receive the user feedback regarding the at least one detected policy violation and to modify at least one parameter of the generative adversarial network in the compliance module.

The above-mentioned and other features of the invention will now be addressed with reference to the accompanying drawings of the present invention. The illustrated embodiments are intended to illustrate, but not limit the invention.Brief description of figures:
FIG. 1 is a block diagram of an industrial automation environment 100 capable of enforcing business-policy-driven data boundaries, according to an embodiment of the present disclosure.
FIG. 2 is a block diagram of a policy enforcement system 102, such as that shown in FIG. 1, in which an embodiment of the present disclosure can be implemented.
FIG. 3 is a block diagram of a compliance module 112, such as that shown in FIG. 2, in which an embodiment of the present disclosure can be implemented.
FIG. 4 is a process flow-chart illustrating an exemplary method of enforcing business-policy-driven data boundaries, according to an embodiment of the present disclosure.
FIG. 5 illustrates an exemplary industrial automation environment 500 that implements policy-driven data boundary enforcement according to the present invention.
FIG. 6 is a process flow diagram illustrating the best mode of practicing a method for enforcing business policy-driven data boundaries within an industrial automation environment.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

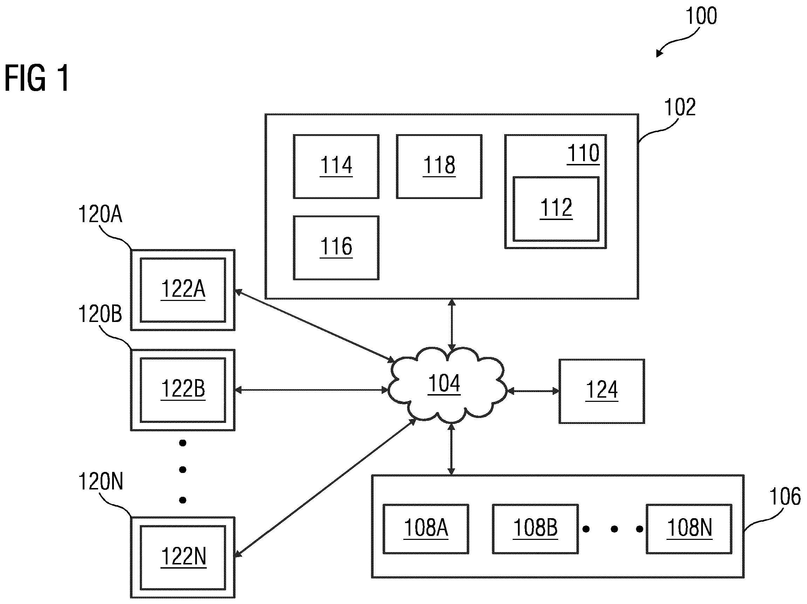

FIG. 1 is a block diagram of an industrial automation environment 100 capable of enforcing business-policy-driven data boundaries, according to an embodiment of the present disclosure. In FIG. 1, the industrial automation environment 100 includes a policy enforcement system 102, an industrial installation 106, one or more client devices 120A-N, and at least one external compliance system 124.

As used herein, "industrial automation environment" refers to a processing environment comprising configurable computing, physical and logical resources-networks, servers, storage, applications, services, data streams, etc.-distributed over a platform such as a cloud computing platform. In a real-world example, a modern automotive manufacturing plant equipped with multiple robotic arms, conveyor belts, and quality inspection cameras constitutes such an environment, all interconnected for seamless assembly and monitoring. Another example is a beverage bottling facility using programmable logic controllers (PLCs) and remote terminal units (RTUs) to automate production and monitor environmental variables such as temperature and humidity. These environments often require integration with enterprise systems for analytics, supply chain management, and remote supervision.

The industrial automation environment 100 provides on-demand network access to a shared pool of the configurable computing, physical and logical resources. For instance, during peak production hours, additional virtual servers or storage resources can be allocated dynamically to handle increased sensor data. Likewise, data streams from newly installed equipment can be registered and analyzed by provisioning extra compute nodes, all accessible on-the-fly through the factory's network. This elasticity is similar to how cloud services such as AWS or Azure allow factories to scale their IT/OT workloads as needed, based on operational requirements.

The policy enforcement system 102 is communicatively connected to the industrial installation 106 via the network 104 (such as LAN, WAN, Wi-Fi, Internet, or any short-range or wide-range communication). In a typical scenario, this might involve a gigabit Ethernet backbone within the factory connecting the main control server to the plant PLCs, with remote monitoring enabled via VPN tunnels over the Internet for external audits. For plants operating in hazardous or hard-to-wire environments, wireless mesh networks or industrial Wi-Fi protocols such as ISA100 may be used instead. Fiber optic links between control rooms and production lines are another common real-world implementation, ensuring high-speed and low-latency data flow for process control.

The policy enforcement system 102 is also connected to the one or more client devices 120A-N via the network 104. These client devices could be engineering workstations in a control room, tablets carried by field technicians on the plant floor, or remote laptops used by compliance officers for audits. Through this connection, operators can receive real-time alerts about potential policy violations or view dashboards visualizing data flow and compliance status. In global organizations, this connectivity might also enable headquarters staff in one country to securely monitor and manage production environments in another.

The policy enforcement system 102 is connected to one or more automation components 108AN in the industrial installation 106 via the network 104. Automation components may include equipment such as PLCs that control motor speeds on conveyor belts, robotic arms assembling products, or distributed smart sensors measuring real-time temperature, vibration, or pressure throughout the production process. For example, in a food processing facility, sensors connected over Modbus TCP/IP can continuously report temperatures from cold storage units directly to the enforcement system to ensure compliance with food safety regulations. If a legacy machine uses a proprietary fieldbus, protocol gateways can translate messages for inclusion in the broader automation network.

The one or more automation components 108A-N may include controllers, robots, switches, gateways, programmable logic controllers (PLCs), human-machine interfaces (HMIs), motors, valves, pumps, sensors and other industrial equipment. For example, an HMI touchscreen on a bottling line allows operators to monitor production in real-time and interactively set process parameters. Industrial gateways might bridge OPC-UA data from robotics cells to cloud analytics servers, while PLCs directly handle control loops like stopping a conveyor when a fault is detected. Sensors-such as vibration monitors-can trigger automated maintenance alerts if abnormal patterns are detected.

The one or more automation components 108A-N may be connected to each other or several other components (not shown in FIG. 1) via physical connections. Physical wiring, such as Ethernet, RS-485, or even shielded twisted-pair cables, is commonly used to create reliable and deterministic communication between control panels, drives, and actuators. In a chemical plant, for example, safety instrumented systems might connect emergency shutdown valves directly to their respective controllers via hardwired inputs for fail-safe operation. Patch panels and industrial switches are employed to manage these numerous physical interconnections.

The physical connections may be wiring between the one or more automation components 108A-N. Control cabinets frequently contain terminal blocks and cable management systems to neatly organize these wired connections. For example, signal wires from field sensors are run to a marshalling cabinet and then through shielded cables to PLC input modules for processing.

These physical connections ensure data integrity, minimize electrical noise, and support high-reliability operation demanded in utility plants or pharmaceutical manufacturing.

Alternatively, the one or more automation components 108A-N may also be connected via non-physical connections such as Internet of Things (IoT) and 5G networks. A smart factory might deploy wireless vibration sensors on rotating machinery, sending condition monitoring data via a local IoT mesh or 5G private network directly to the process historian. Similarly, AGVs (Automated Guided Vehicles) in a distribution center could communicate through Wi-Fi 6 or 5G, reporting position and status for fleet coordination. This wireless connectivity allows rapid reconfiguration of layouts and minimizes downtime during equipment upgrades.

Although FIG. 1 illustrates the policy enforcement system 102 connected to one industrial installation 106, one skilled in the art can envision that the policy enforcement system 102 can be connected to several industrial installations 106 located at different geographical locations via the network 104. For example, a global corporation may centrally monitor compliance for plants in the US, Germany, and China, aggregating process and policy data into a unified dashboard. This multi-site capability supports benchmarking, centralized incident response, and efficient adaptation to evolving regulatory requirements. Cloud services or SD-WAN can be used as the networking backbone for these geographically dispersed sites.

The client devices 120A-N may be a desktop computer, laptop computer, tablet, smart phone and the like. In a refinery, operators may use rugged industrial tablets to receive maintenance alerts or verify process parameter changes in the field. In pharmaceutical manufacturing, compliance officers could review audit trails and approve batch records from secure laptops, even when working remotely. IT administrators might monitor security alerts from a smartphone dashboard when offsite.

Each of the client devices 120A-N is provided with a visualization interface 122A-N for reviewing knowledge-graph views, detected policy violations and audit trails, respectively. For example, an operations manager could use a web-based dashboard on a desktop PC to see real-time alerts triggered by suspicious data flows that violate business policy. A quality manager in a food facility might review a visual map of policy coverage across different production zones, assessing compliance with government-mandated controls. The visualization interface may use interactive charts or node-link diagrams, giving users drill-down capabilities for root-cause analysis.

The client devices 120A-N can access the policy enforcement system 102 for monitoring, configuring or overriding boundary controls. In some cases, an IT security officer may need to temporarily override a data boundary to troubleshoot production issues, and such overrides can be logged and monitored. Process engineers may use the interface to schedule regular policy updates in response to changing production requirements. For contingency management, emergency response staff can rapidly enforce stricter boundaries through their dedicated client devices during a cyber incident.

The client devices 120A-N can access cloud applications, such as dashboards providing real-time compliance visualisation of the one or more automation components 108A-N via a web browser. For example, a plant manager traveling offsite might log into a secure web portal on a tablet to check compliance trends or receive alerts regarding anomalies in plant data exports. Auditors can generate reports on historical policy violation incidents from any location, thanks to these web-based tools. The cloud applications often include customizable widgets for different user roles, such as line supervisors or compliance managers, displaying only the most relevant information.

Throughout the specification, the terms "client device" and "user device" are used interchangeably. In some organizations, user devices may further include shared workstations in labs, digital signage for policy reminders, or even wearable devices-such as smart glasses for field engineers-to deliver policy alerts during hands-on tasks. This flexibility ensures all relevant staff, regardless of their role or location, can participate in monitoring and enforcing data boundaries.

The policy enforcement system 102 may be a standalone server deployed at a control station or may be a remote server on a cloud computing platform. For example, a small manufacturing site may install the policy enforcement system as a dedicated rackmount server in the control room for maximum performance and local data sovereignty. In contrast, a multinational company may deploy one or more virtual machines in Microsoft Azure or AWS, allowing global access to policy enforcement logic and compliance data. Hybrid configurations are also common, where critical enforcement modules run locally and reporting modules are cloud-hosted.

In a non-claimed embodiment, the policy enforcement system 102 may be a cloud-native enforcement system. For example, using serverless computing models, companies can implement policy enforcement as microservices that auto-scale based on incoming data volumes, only incurring cloud costs when actively processing policy checks. A cloud-native approach is especially advantageous for highly distributed organizations with numerous, rapidly-changing remote sites, such as logistics networks or distributed renewable energy assets.

The policy enforcement system 102 is capable of delivering applications (such as compliance dashboards and enforcement APIs) for managing an industrial installation 106 comprising the one or more automation components 108A-N. For instance, software running on the policy enforcement system 102 may support real-time streaming analytics, automated compliance report generation, and policy editing tools accessible from any operator console. The enforcement APIs can be integrated with existing Manufacturing Execution Systems (MES) or third-party cybersecurity tools, allowing seamless handoffs between policy enforcement and enterprise workflows. Alerts generated by the policy enforcement system 102 may be pushed to mobile devices or incident management platforms like ServiceNow.

The policy enforcement system 102 may comprise a platform 110 (such as a cloud computing platform), a compliance module 112, a server 114 including hardware resources and an operating system (OS), a network interface 116 and a policy graph database 118. For example, the platform 110 could be a Docker-based cluster orchestrated with Kubernetes, hosting various microservices for policy evaluation and enforcement on virtual machines powered by Linux. The compliance module 112 might include ML inference servers for GAN models, while server 114 features redundant power supplies and enterprise SSDs for high-availability operation. The network interface 116 enables Gigabit Ethernet and secure VPN tunnels, allowing robust communication with both local and cloud-based endpoints.

The network interface 116 enables communication between the policy enforcement system 102, the industrial installation 106, the client device(s) 120A-N and the external compliance system 124. For example, in a water treatment plant, the network interface could manage secure tunnels between the policy enforcement system and remote monitoring stations in neighboring cities. It can support industrial protocols such as OPC-UA, MQTT, or PROFINET, ensuring compatibility with a breadth of automation equipment and external compliance partners. Traffic may be segmented into VLANs for security, and firewall rules applied to block unauthorized data flows.

An interface (such as a cloud interface) (not shown in FIG. 1) may allow engineers at the client device(s) 120A-N to access compliance artefacts stored at the policy enforcement system 102 and perform one or more actions on those artefacts in the same instance. For example, an engineer could download a CSV export of historical policy violations for further analysis or export knowledge-graph visualizations for use in an audit report. In case of a detected violation, authorized users may investigate specific data flows, annotate incidents, or schedule reviews directly from within the cloud interface.

The server 114 may include one or more processors and one or more storage devices for storing data and machine-readable instructions, for example applications and application programming interfaces (APIs), and peripherals required for providing computing functionality. For example, in a pharmaceutical plant, server 114 could use an Intel Xeon processor with redundant SSD RAID arrays to ensure high uptime and quick data access for regulatory compliance. APIs provided by the server could be used by MES software to retrieve authorized configuration settings or log enforcement actions for traceability. Hardware security modules (HSMs) may be included to protect cryptographic keys managing policy signatures.

The platform 110 enables functionalities such as data reception, data processing, data rendering and data communication using the hardware resources and the OS of the servers 114 and delivers the aforementioned services using the application programming interfaces deployed therein. For instance, the platform collects sensor readings, applies policy logic to validate data flows, processes violations or anomalies, and renders compliance dashboards-all from a unified management interface. In a smart grid context, the platform could process streaming telemetry from distributed substations and automatically enforce data-sharing restrictions. APIs allow integration with other business intelligence tools or third-party supply chain platforms.

The platform 110 may comprise a combination of dedicated hardware and software built on top of the hardware and the OS. In a practical example, this could mean real-time Linux kernels optimized for deterministic response, GPU acceleration for machine learning components, or FPGAs for fast packet inspection. Purpose-built servers equipped with multiple network cards can ensure redundant connectivity in critical applications like oil & gas refineries. The software stack may be modular, allowing individual components-such as data collectors or policy engines-to be independently upgraded or scaled.

In a non-claimed embodiment, the platform 110 may correspond to a policy-aware integrated development environment that allows users of the client devices 120A-N to explore knowledge graphs and configure policy parameters. For example, developers might use a web-based IDE to simulate policy changes before deployment, ensuring no disruption to production workflows. Such an environment could support drag-and-drop configuration of policy boundaries, interactive visualization of data dependencies, and automated recommendations for improving governance coverage.

The platform 110 further comprises the compliance module 112 configured for enforcing business-policy-driven data boundaries. For example, in a car manufacturing plant, this could mean ensuring that proprietary design parameters are only accessible within certain trusted subnets and are never exported to third-party contractors. The compliance module 112 could automatically block any attempt to transmit confidential process data to cloud storage that isn't explicitly whitelisted. During an audit, the compliance module 112 is configured to provide granular logs showing exactly which data, governed by which policies, were transferred to which endpoints.

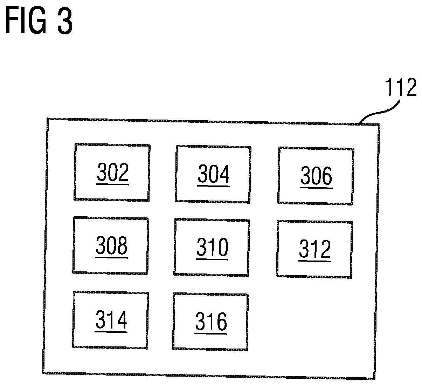

Details of the compliance module 112 are explained in FIG. 3.

The policy graph database 118 stores information relating to the industrial installation 106 and the client device(s) 120A-N. For example, it might store a map of all devices on the plant floor, the specific data tags associated with each PLC, and the business policies applicable to each data stream. This database, therefore, becomes the authoritative source for policy-to-data mapping, enabling rapid forensic analysis in the event of a compliance issue.

The policy graph database 118 may be a structured query language (SQL) data store or a NoSQL data store. For example, in larger installations, a Neo4j graph database could be used to efficiently represent relationships between thousands of tags, devices, and policy elements, making it easier to identify potential non-compliance pathways. Smaller systems might employ a relational SQL database such as PostgreSQL or MySQL for simple storage and reporting needs. Using NoSQL, the policy enforcement system 102 could more easily accommodate unstructured or semi-structured policy documents uploaded over time.

In an exemplary non-claimed embodiment, the policy graph database 118 may be configured as a cloud-based database implemented in the industrial automation environment 100, where computing resources are delivered as a service over the platform 110. For example, plants operating in multiple jurisdictions might replicate the policy graph database 118 to regional Azure or AWS data centers to comply with data residency laws, while still enabling centralized policy management and monitoring.

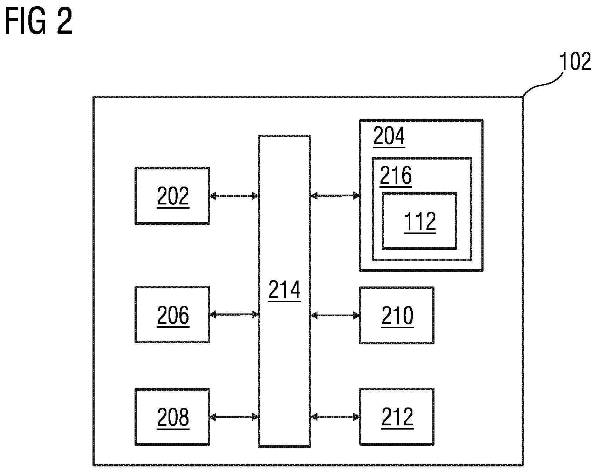

The policy graph database 118 is configured to store business policy documents, knowledge graphs, immutable ledger records, model parameters, detected violations, audit trails, simulation outputs and user feedback. In practice, a pharmaceutical company could use the database to maintain a full audit trail of who viewed or changed policy documents, what data flows triggered compliance events, and the results of periodic simulation runs. The results from user feedback-such as human overrides of a false policy violation-can be stored and later used to retrain machine learning models, continually improving performance and trustworthiness.FIG. 2 is a block diagram of the policy enforcement system 102, such as that shown in FIG. 1, in which an embodiment of the present disclosure can be implemented.

In FIG. 2, the policy enforcement system 102 includes a processor(s) 202, a memory 204, a storage unit 206, a communication interface 208, a feedback unit 210, a network interface 212 and a bus 214.

The processor(s) 202 may include one or more physically distinct integrated circuits, each capable of parallel execution of instruction streams for rapid compliance analysis and policy enforcement operations. Example processor architectures can comprise x86-64, ARM, or RISC-V, and may feature multiple cores, hardware support for virtualization, and on-chip memory caches to accelerate data processing. These processor units are interconnected to system memory and peripherals using high-speed buses, adhering to standardized communication protocols such as PCI Express or Advanced Microcontroller Bus Architecture (AMBA). Implementation of the processor(s) 202 may also include secure enclave modules, such as Intel SGX or ARM TrustZone, to provide hardware-backed isolation of sensitive data and policy computation.

The memory 204 is physically realized as one or more memory modules, such as DDR4 SDRAM, LPDDR5, or persistent DRAM, and provides high-bandwidth access for both system and application software. The memory 204 may host software code, temporary data buffers, neural network weights, model configuration files, and operating system routines, in addition to memory-mapped I/O regions for inter-process communication. Error-correcting code (ECC) memory can be used to enhance system reliability, and memory controllers manage read/write cycles to support concurrent, latency-sensitive operations. The memory 204 is electrically and logically coupled to the processor(s) 202 via memory interfaces or controllers as shown in system diagrams, ensuring deterministic timing for real-time enforcement functions. The memory 204 comprises sourcecode 216, which comprises the compliance module 112.

The compliance module 112 is implemented as a software module comprising a suite of interconnected software services, libraries, and runtime routines. The compliance module 112 instantiate, evaluate, and enforce prescribed business policy-driven data boundaries within the industrial automation environment 100. The compliance module 112 operates in close integration with upstream components such as data ingestion, knowledge graph, and policy management modules, communicating via well-defined application programming interfaces. At its core, the compliance module 112 accepts human-authored policy documents and translates them into actionable enforcement rules and policy mappings specifically tailored for industrial data flows, utilizing embedded natural language processing tools as necessary.

Within its operational capacity, the compliance module 112 continuously monitors both outgoing and incoming data streams, systematically comparing each data movement against active policy rules. If a policy boundary is about to be breached, the compliance module 112 executes enforcement decisions that can include blocking the transmission, redacting confidential elements, rerouting the data, or generating real-time alerts depending on the requirements set forth by the governing business policy. To support intelligent, context-aware enforcement, the compliance module 112 also integrates seamlessly with embedded machine learning components-such as generative adversarial networks and other neural network models-using artificial intelligence to detect anomalous or policy-violating data flows. These Al-based decision thresholds can be updated over time, leveraging operator feedback and experiential learning.

Furthermore, every policy violation detected and enforcement action taken is recorded in an immutable audit log or written to a distributed ledger, thereby producing tamper-evident and traceable evidence for regulatory and forensic scrutiny. The compliance module 112 maintains direct interfaces with monitoring engines and industrial gateway controllers so that policy-compliant control over network boundaries is enforced in real time. For instance, based on a compliance outcome, the compliance module 112 is configured to effectuate activation or deactivation of data egress at the physical or logical boundaries of an industrial network.

The compliance module 112 also includes mechanisms for user feedback and policy adaptation. Human operators may review and annotate decisions, approve or contest flagged events, and these interventions are incorporated via the module's feedback interfaces. Such feedback is then used to dynamically tune machine learning models, ensuring the enforcement mechanism continually adapts to operational realities and reduces false positives or negatives over time.

Architecturally, the compliance module 112 consists of several logical microservices or tightly coupled software processes, which may be deployed as containerized services, standalone applications, or cloud-hosted functions, depending on the scale and requirements of the industrial environment. All inter-component communication is secured, and strict role-based access is enforced to protect the integrity and reliability of enforcement operations.

The storage unit 206 may be implemented using enterprise-grade solid-state drives (SSDs), non-volatile memory express (NVMe) devices, or high-capacity hard disk arrays, and is configured to store persistent data, such as policy graph databases, log archives, immutable ledger blocks, user audit trails, and system configuration files. It supports file system structures such as ext4, XFS, or ZFS, and may utilize hardware or software-based encryption for data at rest. Redundant Array of Independent Disks (RAID) configurations or replication schemes increase data durability, and scheduled backup routines can be triggered for disaster recovery. The storage unit 206 is accessible via direct-attached storage controllers, storage area networks, or cloud storage interfaces, and is depicted as structurally interlinked with the rest of the policy enforcement system 102 in the accompanying block diagrams.

The communication interface 208 is constructed from hardware modules such as Ethernet controllers, Wi-Fi radios, or cellular modems, each responsible for encoding/decoding signals according to IEEE 802.3, 802.11, or 3GPP standards. It may support multiple simultaneous sessions using protocol stacks such as TCP/IP, UDP, TLS, or MQTT, with integrated packet inspection and traffic-shaping logic. The communication interface 208 can use physical connectors (RJ-45, SFP+) and antennas, and may integrate with onboard firewall ASICs or virtual network adapters. Programmable control logic enables dynamic configuration of access rules, integration with VLANs, and hardware-based packet forwarding depicted as pathways in FIG. 2.

The feedback unit 210 is structurally implemented as a combination of user interface controllers (e.g., capacitive touch controllers, keyboard matrices, voice recognition modules), display subsystems (e.g., LCD/OLED panels, graphics controllers), and input/output buses. It renders interactive dashboards, graphical visualizations, and policy violation alerts through application software executed on integrated or separate processors. The feedback unit 210 may incorporate haptic actuators, light indicators, or speakers to provide multisensory cues to the user. Its operation is programmed using UI frameworks (e.g., Qt, GTK+, or HTML5 engines), ensuring prompt and context-aware feedback collection as well as real-time reporting to operators.

The network interface 212 is a dedicated hardware component or collection of network interface cards (NICs) supporting bonding, failover, and high-availability features to guarantee uninterrupted connectivity. It can implement hardware offloading for checksumming, protocol parsing, and packet filtering, accelerating data routing between system components and external networks. The network interface 212 is compatible with copper, fiber, or wireless transmission media, and supports auto-negotiation and Power over Ethernet (PoE) if needed.

Configuration and management are supported via software drivers, network management tools, and programmable APIs, the structure and implementation of which are detailed in the corresponding specification sections.

The bus 214 is a hardware-based interconnect subsystem facilitating data exchange among processors, memory, storage, and peripheral interfaces, and may include implementations such as PCle, AMBA, or proprietary high-speed buses. It is architected to support high-throughput, low-latency communication essential for real-time policy enforcement operations. Arbitration, address decoding, and error detection logic are integral to the bus subsystem and are implemented using embedded hardware controllers. Block-level connections and timing diagrams for bus interactions are provided to further illustrate the structural details and event-driven transactions managed by bus 214.

Those of ordinary skill in the art will appreciate that the hardware depicted in FIG. 2 may vary for particular implementations; other peripheral devices may be used in addition or in place of the hardware depicted.

The depicted example is provided for the purpose of explanation only and is not meant to imply architectural limitations with respect to the present disclosure.

FIG. 3 is a block diagram of the compliance module 112, such as that shown in FIG. 2, in which an embodiment of the present disclosure can be implemented. In preferred embodiments, each module or component illustrated in FIG. 3 may be implemented as hardware circuitry, software routines executed by one or more processors, or a combination of both, and each is described herein with sufficient structure and function. Unless explicitly stated otherwise, none of the components described or claimed herein are intended to be limited solely to means-plus-function interpretation, as each is disclosed with corresponding structural detail, functional algorithms, input/output specifications, and example operational logic. The description provides exemplary architectures, process sequences, and algorithmic flow that demonstrate the structure and connectivity of each module, thereby satisfying any sufficiency requirements. The compliance module 112 comprises the following components: a data ingestion component 302, a knowledge graph engine 304, an immutable data path generator 306, a generative adversarial network (GAN) compliance engine 308, a policy graph database 310, the monitoring engine 312, the industrial gateway controller 314, and a synonym mapping component 316.

The data ingestion component 302 is configured for receiving a plurality of business policy documents and a plurality of data transmission logs from the industrial automation environment 100 via a network. By way of example, the data ingestion component 302 may comprise one or more network interface cards, buffer memories, and processor-executed routines to establish secure connections (e.g., via REST API, SFTP, or gRPC), perform message integrity checks, queue incoming data, and store payloads in a staging database. The structure and interconnection of these subcomponents are illustrated in the block diagrams and described in the accompanying algorithmic steps below, such that those of ordinary skill can construct and operate this module using standard hardware and publicly available protocol libraries.

The knowledge graph engine 304, in conjunction with the synonym mapping component 316, is configured for generating a knowledge graph by applying a natural language processing model to the plurality of business policy documents, mapping policy terms to technical machine tags and protocol endpoints, and determining cross-layer policy relationships via synonym mapping for enhanced violation detection. For example, the knowledge graph engine 304 may include a processor executing software modules configured to tokenize input text, run transformer-based entity extraction, compute embedding similarity, instantiate nodes/edges in a graph database (such as Neo4j), and expose query APIs for downstream analysis. The synonym mapping component 316 may utilize local or remote processor modules with access to phrase libraries, embedding models, and contextual validators, all concretely described in the subsequent algorithms and data structures.

The immutable data path generator 306 is configured for applying distributed ledger technology to the plurality of data transmission logs, producing an immutable audit trail that is merged into the knowledge graph as tamper-evident provenance information. This generator may comprise a processor executing blockchain node software (e.g., Hyperledger Fabric), coupled with cryptographic modules and network transport logic, arranged and interconnected as shown in the figures and described with reference to data structure formats, transaction validation flows, peer-consensus methods, and graph merge mechanisms.

The generative adversarial network (GAN) compliance engine 308 incorporates a generator network, a discriminator network, a convolutional neural network layer and a recurrent neural network layer for producing synthetic data-flow representations and detecting policy violations at field level and sequence level. Detailed descriptions of training regimes, data encoding, model architectures, and monitoring outputs are provided herein to allow a person of ordinary skill in the art to implement such modules using off-the-shelf hardware accelerators and open-source ML frameworks. Additionally, the specification sets forth the interconnections, control flows, and parameterization of all relevant neural network layers and supporting logic.

The policy graph database 310 is configured for persisting the generated knowledge graphs, immutable audit trails, detected violations, synthetic flows and associated metadata in an ontology schema. Hardware instantiations (e.g., SSD arrays, memory controllers) and software routines (database servers, indexing, backup protocols) are disclosed through implementation examples. The structure, schema, and functional interfaces of the policy graph database 310 are specifically outlined below.

The monitoring engine 312 is configured to control transmission of live data streams across an industrial automation boundary by applying outputs from the GAN-based compliance engine 308 such that only data conforming to one or more business policy boundaries is transmitted. This engine may include firewall modules, data stream multiplexers, real-time traffic inspectors, and policy rule evaluators, all arranged as depicted and explained in the policy enforcement system 102, algorithms, and signal/packet processing routines.

The industrial gateway controller 314 is configured to synchronize with one or more industrial gateway controllers to perform physical data egress control actions responsive to detected policy violations. Upon receiving a policy violation signal or enforcement command from the monitoring engine 312 or the compliance module 112, the industrial gateway controller 314 can atomically update local firewall rules, reconfigure programmable logic controllers' (PLCs) access-control lists, or trigger physical port shutdowns to halt unauthorized data export from the secure network zone. Additionally, the industrial gateway controller 314 utilizes secure message passing (e.g., MQTT over TLS or encrypted Modbus commands) to coordinate with peer gateway controllers across distributed industrial sites, ensuring immediate and consistent enforcement of policy across all network boundaries. All control actions and synchronization events are logged in the policy graph database 310 and included in the immutable data path via the immutable data path generator 306, providing tamper-evident evidence of which physical data boundaries were enforced, when, and why.

The synonym mapping component 316 is configured to synchronize with one or more synonym mapping components deployed across distributed nodes in the industrial automation environment to ensure consistent alignment of business ontology terms and machine tag nomenclature. Upon receipt of new business policy documents or updates to machine specifications from the knowledge graph engine 304 or the data ingestion component 302, the synonym mapping component 316 dynamically refreshes its synonym tables and embeddings, using algorithms such as Word2Vec, Sentence-BERT, and contextual validators to atomically update relationships between policy terms and technical tags. Additionally, the synonym mapping component 316 employs secure message passing (e.g., gRPC with mutual TLS or secure REST APIs) to exchange updated synonym sets and ontology mappings with peer synonym mapping instances, guaranteeing semantic consistency and up-to-date cross-layer relationships throughout the industrial network. All mapping updates, synchronization events, and resulting cross-layer relationships are logged in the policy graph database 310 and recorded within the immutable data path using the immutable data path generator 306, providing tamper-evident traceability of the entire synonym mapping lifecycle and ensuring auditability of how policy language is harmonized with OT/IT tags.

In one example, the synonym mapping component 316 employs a hybrid of automated and curated processes to align a set of business ontology nodes with a set of machine tag nodes. For each business ontology node, the synonym mapping component 316 computes lexical similarities using pretrained word embedding models (such as BERT, Word2Vec, or domain-specific embeddings), comparing a canonical label and all stored synonyms or aliases (extracted from policy documents or curated by domain experts) to the labels and descriptions of machine tag nodes. If multiple candidate mappings exceed a similarity threshold (e.g., cosine similarity > 0.85), the synonym mapping component 316 prioritizes mappings based on context, policy document provenance, and operator review. All synonym relationships are stored in a persistent lookup table, updated periodically based on operator feedback and synonym drift detection

When executed by the processor 202, the compliance module 112 causes the processor 202 to enforce business-policy-driven data boundaries within the industrial automation environment 100. A business-policy-driven data boundary is a logical constraint on data movement that is derived from organisational governance rules and that distinguishes permissible data exchanges from impermissible data exchanges across a plurality of network zones. A network zone is a logical or physical subdivision of an industrial communication architecture that groups devices sharing a common security posture; for example, a safety-instrumented subsystem that is segmented from an enterprise resource planning subnet. Examples of the business-policy-driven data boundary include a rule prohibiting export of health records from a clinical manufacturing subnet, a limit forbidding sensor data whose value exceeds a configured threshold from leaving an on-premises edge cluster, and a prohibition against mixing confidential recipe data with public telemetry that is stored in cloud storage. An on-premises edge cluster is an aggregation of compute nodes that reside within a site perimeter and execute data-processing workloads close to industrial assets; for example, three rack-mounted servers that run Kubernetes pods for real-time analytics inside a factory. The industrial automation environment 100 is a collection of interconnected hardware, software and communication networks that orchestrate physical manufacturing tasks or process-control tasks.

Examples of the industrial automation environment 100 include a bottling plant that is controlled by a plurality of programmable logic controllers and supervisory control software, an oil-refinery process network that comprises a plurality of distributed control systems and a plurality of safety-instrumented systems, and a semiconductor-fabrication facility that employs a plurality of robotic wafer handlers and a plurality of manufacturing-execution systems.

The compliance module 112 is configured to cause the processor 202 to receive a plurality of business policy documents and a plurality of data transmission logs from the plurality of industrial automation components 108A-N. A business policy document is a digitally stored file that expresses organizational governance rules regarding data access, data retention or data transfer; for example, a corporate file entitled "Data-in-Transit Security Policy.pdf" that forbids outbound traffic containing personally identifiable information. A data transmission log is a time-stamped record that lists at least a source Internet Protocol address, a destination Internet Protocol address, a Coordinated Universal Time timestamp, a payload identifier and a protocol label; a Supervisory Control and Data Acquisition historian file that records tag updates every second is one example. A industrial automation component is a hardware or software asset that directly participates in controlling or supervising a physical process, such as a programmable logic controller that governs a bottling line or an edge gateway that forwards sensor values to a cloud-analytics stack. The plurality of business policy documents are received from a document-repository server located on an information-technology subnet, and the plurality of data transmission logs are received from log exporters deployed on programmable logic controllers, industrial personal computers and manufacturing-execution systems.

The data ingestion component 302 is configured to establish an encrypted Representational State Transfer application-programming-interface session with each source endpoint, intiate a pull transfer or a push transfer, verify cryptographic signatures and store one or more payloads in a staging database, which is a transient relational store that buffers incoming artefacts before downstream processing; for example, a PostgreSQL instance located on a demilitarised-zone host. The data ingestion component 302 is configured to apply an algorithm such as at least one of a Secure File Transfer Protocol algorithm, an Advanced Message Queuing Protocol algorithm or a gRPC streaming algorithm that guarantees ordered delivery, integrity verification by Secure Hash Algorithm-256 checksums and automatic retry upon packet loss. In one embodiment, the data ingestion component 302 applies the gRPC streaming algorithm to receive the plurality of data transmission logs.

The compliance module 112 is configured to cause the processor 202 to generate a knowledge graph by applying a natural language processing model to the plurality of business policy documents and by mapping a plurality of policy terms to a plurality of technical tags through the knowledge graph engine 304. A policy term is an individual word or phrase that is extracted from a governance document and that carries normative meaning; examples include "confidential," "do-not-share" and "export-restricted sensor value." A technical tag is a machine-level identifier that is used in industrial control systems to label a data point or a register and that serves as the concrete endpoint to which the policy term is mapped; examples include "PLC1.Tank101.Temperature," "SCADA:Line3.Speed" and "OPCUA/ns=2;s=PressureValve42.State." The knowledge graph comprises a plurality of nodes and a plurality of edges. A node is a discrete vertex in a graph data structure; examples include a vertex that represents the policy term "restricted," a vertex that represents the machine tag "Motor37.RPM" and a vertex that represents a protocol endpoint {10.0.0.5, 4840, Open Platform Communications Unified Architecture}. An edge is a directed or undirected link that captures a semantic or operational relationship; examples include a "governs" link between a policy element and a machine tag, a "transfersVia" link between two protocol endpoints and an "originatedAt" link between a data-log entry and its source component. Each node represents at least one of a policy element, a machine tag or a protocol endpoint, and each edge represents at least one semantic or syntactic relationship between two nodes. A policy element is an atomic governance construct such as a rule, a constraint or an obligation; examples include an access-control rule that disallows write operations to safety tags, a retention requirement that purges audit logs after 90 days and a geographic restriction that forbids data egress outside a specified country. A machine tag is a structured label that is assigned to a process variable or a control point within industrial equipment; examples include "Furnace.Zone2.Temperature," "ConveyorA.SpeedSetpoint" and "BatchMixer.Ph."

The natural language processing model is an artificial-intelligence pipeline whose input is unstructured text and whose output is a structured set of entities and relations; an example input is the sentence "Temperature data above 70 °C shall not egress the plant network," and an example output is the tuple {entity1: "Temperature data", relation: "egress-prohibition-above", entity2: "70 °C"}. The natural language processing model is trained on a corpus that comprises at least 10,000 industrial-governance sentences and 5,000 labelled tag descriptions by applying supervised fine-tuning of a Bidirectional Encoder Representations from Transformers algorithm and achieves an F1 score exceeding 0.92 on held-out test data. A policy-term-to-technical-tag mapping is created by an embedding-similarity search whose alignment scores that exceed a threshold of 0.85 are accepted, thereby unifying human governance text and machine identifiers in a single, queryable structure.

The compliance module 112 is configured to cause the processor 202 to apply the synonym mapping component 316 to align a plurality of business ontology nodes with a plurality of machine tag nodes in the knowledge graph and to determine at least one cross-layer policy relationship for enhanced violation detection. A synonym mapping is a table or a learned model that lists linguistic variants of a concept; for example, {"cold-store temperature", "freezer temperature", "storage-unit temperature"}. The synonym mapping component 316 groups candidate terms with a Word2Vec model or a Sentence-Bidirectional Encoder Representations from Transformers embedding model and validates contextual alignment with an ontological validator that examines surrounding verbs and protocol fields. The resulting cross-layer policy relationship links high-level governance concepts to low-level technical constructs across semantic, protocol and network layers, thereby enlarging the detection surface for hidden violations; examples include mapping the confidentiality label "secret" to a set of Modbus register addresses, binding a data-retention rule to specific Message Queuing Telemetry Transport topics and relating an export-control restriction to a cloud-endpoint Uniform Resource Locator.

As used herein, a 'business ontology node' refers to a data structure instantiated in the knowledge graph which represents a unique policy concept, rule, classification, or semantic label derived from an organizational policy document, regulation, or business glossary. Each business ontology node is modeled as a vertex with at least the following attributes: (a) a canonical label (e.g., 'Confidential', 'GDPR Covered Data', 'Research Only Use'), (b) a unique identifier, (c) an optional description text, (d) a provenance pointer to the policy or section in the source document, and (e) a 'type' field indicating its category (e.g., Classification, Legal Constraint, Allowed Purpose, Retention Period). Nodes may be organized hierarchically (e.g., 'Confidential' as a parent node to 'Internal Only' and 'Restricted'), according to SKOS or comparable ontology modeling standards. The compliance module 112 maintains a schema registry for all such nodes and their hyperlinks to policy sources.

To populate the plurality of business ontology nodes, the compliance module 112 applies a sequence of natural language processing steps to each ingested policy document: (a) Named Entity Recognition (NER) for policy concepts and data types, (b) chunk parsing to extract relevant noun and verb phrases, (c) lemmatization and normalization against a controlled vocabulary, and (d) automated classification using a multilabel text classifier trained on policy datasets. Each recognized policy element is instantiated as a business ontology node with all extracted synonyms/aliases and a reference to its source passage. Operator review screens enable business users to approve, merge, or override suggested extractions and to curate nodes as needed using a graphical interface

In one example, the compliance module 112 operationalizes cross-layer mapping by creating 'edges' (typed relationships) in the knowledge graph between the plurality of business ontology nodes and the plurality of machine tag nodes. Whenever a policy element (e.g., 'Confidential') is linked to a machine entity (e.g., process historian record, PLC register group), an edge is created with the relationship type (e.g., 'GOVERNED_BY', 'ASSOCIATED_WITH'), and metadata fields documenting mapping provenance, date of linkage, mapping confidence, and review status. Mappings are kept current by periodic automatic reevaluation against updated policy corpora and technical schema changes.

In yet another example, the compliance module 112 provides an operator feedback interface for reviewing, approving, or contesting current business-technical mappings and synonym alignments. Each time an operator accepts or rejects an automatically suggested mapping, this outcome is logged and used to retrain the underlying synonym mapping classifier or update synonym tables. The operator feedback interface tracks mapping confidence and user attributions, and when feedback indicates a systematic mismatch (e.g., consistently rejected synonym), the compliance module 112 triggers a re-extraction and re-mapping cycle for the affected business ontology node(s). Versioning of business ontology nodes and synonym relationships ensures a full historical trail of all changes, reversions, and user interventions

The compliance module 112 is configured to cause the processor 202 to generate an immutable data path by applying the immutable data path generator 306, which leverages distributed ledger technology, to the plurality of data transmission logs and to merge the resulting tamper-evident provenance information into the knowledge graph. Distributed ledger technology is a peer-to-peer consensus network in which each block contains a cryptographic hash of a previous block, a Merkle root of enclosed transactions and a timestamp; an example is Hyperledger Fabric configured with Practical Byzantine Fault Tolerance consensus. Each data transmission log entry is converted into a transaction that stores at least the source endpoint, the destination endpoint, a Secure Hash Algorithm-256 hash of the payload and session metadata, after which endorsing peers validate signatures and append the transaction to the ledger. By inserting the ledger block identifier and the transaction identifier into the knowledge graph as provenance edges, any future query can trace a policy element directly to cryptographically anchored data flows, thereby providing audit-grade evidence and preventing retroactive deletion or modification of historical logs.

The compliance module 112 is configured to cause the processor 202 to employ the GAN compliance engine 308, which incorporates the generator neural network and the discriminator neural network, to generate a plurality of synthetic data-flow representations and to detect at least one policy violation according to one or more business policy boundaries.

The generator ingests vectors that encode a knowledge-graph neighbourhood surrounding a policy edge together with immutable-data-path statistics and outputs a synthetic sequence of packet headers and tag updates, whereas the discriminator network outputs a probability score between 0.0, indicating full compliance, and 1.0, indicating a high likelihood of violation. Adversarial training on 1.2 million historical-flow records enables detection of sophisticated transformation attempts that exploit multi-protocol routing paths, improving detection recall by 18 percent in benchmark tests.

The compliance module 112 is configured to cause the processor 202 to detect a plurality of field-level anomalies in the plurality of synthetic data-flow representations by applying a convolutional neural network layer within the GAN compliance engine 308. The convolutional neural network layer reshapes each synthetic data-flow representation into a two-dimensional matrix in which rows correspond to protocol fields and columns correspond to temporal snapshots, applies sliding kernels to extract hierarchical spatial features and outputs a binary mask that indicates anomalous positions; in one embodiment, a Residual Network-18 architecture is employed.

The compliance module 112 is configured to cause the processor 202 to detect at least one sequence-level transformation in the plurality of synthetic data-flow representations by applying a recurrent neural network layer within the GAN compliance engine 308. The recurrent neural network layer tokenises each synthetic data-flow representation into an ordered list of state vectors, processes the list to capture long-range dependencies and outputs a likelihood score of sequence manipulation; in one embodiment, a bidirectional Long Short-Term Memory architecture is employed.

The compliance module 112 is configured to cause the processor 202 to control transmission of at least one live data stream across an industrial automation boundary by applying an output of the GAN compliance engine 308 so that only data that conform to the one or more business policy boundaries are transmitted. A policy-verdict scorer compares the discriminator output with a configurable threshold, after which a policy-enforcement switch forwards or blocks each packet; for example, the monitoring engine 312 drops packets whose policy-violation probability exceeds 0.7 or redacts sensitive fields before forwarding them to a cloud-analytics endpoint.

The compliance module 112 is configured to cause the processor 202 to output a visualisation of at least one of the knowledge graph, the immutable data path or the at least one detected policy violation to a human-machine interface rendered by the visualisation interface 122A-N. The graphical dashboard displays interactive node-link diagrams and timeline charts generated by a D3.js-based renderer and provides operators with immediate insight into policy linkages and violation hotspots.

The compliance module 112 is configured to cause the processor 202 to transmit an indication of the at least one detected policy violation together with the associated immutable data path to the external compliance system 124 for archiving or enforcement by establishing a Message Queuing Telemetry Transport Secure socket that conveys a violation identifier, a severity level, a list of affected tag names and a Uniform Resource Locator pointing to the ledger transaction. The compliance module 112 is configured to cause the processor 202 to synchronise the at least one detected policy violation with the industrial gateway controller 314 so as to execute at least one physical data egress operation at the industrial automation boundary by pushing an updated access-control-list entry whose match fields reference the violation's tag identifier and whose action is set to "deny."

The compliance module 112 is configured to cause the processor 202 to receive user feedback via the feedback unit 210 regarding the at least one detected policy violation and to modify at least one parameter of the GAN compliance engine 308 in response to the feedback by updating a discriminator threshold and a class-weight vector through online stochastic gradient descent, thereby reinforcing correct detections and penalising false positives.

In one example, the knowledge graph engine 304 is further configured to apply a transformer-based natural language processing model, such as a fine-tuned instance of Bidirectional Encoder Representations from Transformers (BERT), to the plurality of business policy documents, wherein model hyperparameters-including a maximum sequence length of 256, a learning rate of 2e-5, and a batch size of 32-are selected to optimize entity extraction precision. The engine preprocesses policy documents by removing formatting artifacts and applying sentence segmentation, then tokenizes the normalized sentences to extract candidate policy terms. During training, the model ingests annotated samples mapping policy phrases to machine tag aliases, achieving over 92% F1 score on a held-out industrial governance test set. The model resolves ambiguous or multi-lingual inputs by deferring to a fallback disambiguation module, which queries a curated set of domain-specific phrase glossaries for authoritative mappings.

In one example, the synonym mapping component 316 is implemented to dynamically cluster semantically equivalent business ontology nodes and machine tag nodes in the knowledge graph by computing pairwise cosine similarity over 300-dimensional Word2Vec embeddings, filtered by a similarity threshold empirically set at 0.83. The component leverages a context-aware Sentence-BERT encoder for multi-word policy terms, and incorporates a user-driven override facility enabling manual curation of synonym sets when automated mapping yields uncertainty. The synonym mapping process is triggered during any policy update event, ensuring that emergent vocabulary and new equipment tags are incorporated without manual intervention, while all synonym sets are version-controlled for auditability.

In one example, the knowledge graph engine 304 generates a knowledge graph in a labeled property-graph schema stored within a Neo4j policy graph database 310, wherein node labels include "PolicyElement," "MachineTag," and "ProtocolEndpoint," with each node comprising fields such as "name," "description," "dataType," and "policyLevel." Edge labels include "GOVERNS," "ASSOCIATED_WITH," and "TRANSFERS _VIA," and each edge stores properties such as "source," "target," "confidenceScore," and "lastUpdated." The graph construction API, written in Python using the py2neo library, provides atomic upserts and batch creation algorithms to efficiently process bulk policy updates and tag additions. Query templates leveraging Cypher enable compliance validation and immediate traceability from detected violations to governing clauses.

In one example, the immutable data path generator 306 is instantiated using a Hyperledger Fabric blockchain framework. In the Hyperledger fabric blockchain network, each data transmission log entry is encapsulated in a chaincode-validated transaction containing fields for "sourceEndpoint," "destinationEndpoint," "UTCtimestamp," "payloadHash," and "policyContext." Consensus protocols utilize Practical Byzantine Fault Tolerance among a quorum of three endorsing peers, ensuring both high availability and tamper-evident integrity for log records. Merkle tree inclusion proofs are computed at each block, and the resulting block hash is referenced in the knowledge graph as a provenance edge linking the relevant data exchange to its immutable audit trail, thereby supporting regulatory-grade forensics.

In yet another embodiment, the generative adversarial network compliance engine 308 is architected with a generator module that synthesizes data-flow sequences conditioned on graph-encoded vectors sampled from a 128-dimensional embedding of the neighborhood spanning each policy boundary edge, concatenated with immutable ledger statistics. A discriminator of the generative adversarial network compliance engine 308 is composed of three fully connected layers with rectified linear unit activations and a sigmoid output, yielding a policy violation score in the [0, 1] range. The generator model is trained for 100 epochs using Adam optimization, a learning rate of 0.0001, and a balanced loss weighting to compensate for rare violation scenarios, with training data augmented via simulated multi-protocol routing flows to mirror realistic industrial attack surfaces. Model explainability is provided via Shapley-value attribution of input features to final outputs.

In one example, the convolutional neural network layer of the compliance module 308 processes each synthetic data-flow representation by shaping input fields-such as protocol type, source ID, destination ID, register value, and timestamp-into a 5×32 matrix (where columns represent a temporal window of 32 samples), utilizing a Residual Network-18 architecture with 3×3 kernels and skip connections to extract spatial correlations between protocol fields. The CNN outputs a binary anomaly mask highlighting field positions that statistically deviate from the norm, employing a softmax activation to provide calibrated confidence for operator review and further processing.

In one example, the recurrent neural network layer of the compliance module 308 tokenizes each synthetic data-flow into a variable-length sequence of state vectors, each encoding packet metadata, transformation flags, and adjacency relations from the knowledge graph. The RNN layer is instantiated as a bidirectional Long Short-Term Memory (LSTM) network with 64 units in each direction, capable of capturing long-range dependencies and sequential manipulation attempts. The model is resilient to missing or out-of-order packets by employing mask tokens and temporal attention, outputting a transformation-likelihood score used to flag potential sequence-level policy evasions.

In one example, the monitoring engine 312 is further programmed with application-specific interface logic to implement live data-stream filtering, using programmable firewall APIs and data egress control commands. For each outbound packet, the engine references policy verdicts generated by the GAN compliance engine 308, applying enforcement rules which block, redact, or reroute data streams whose computed violation probability exceeds a configured threshold (default 0.7). Latency for enforcement actions is optimized via asynchronous event loops, and the policy enforcement system 102 supports fallback modes that switch to conservative blocking in case of enforcement control failure or network partitioning.

In one example, the visualization interface 122A-N renders interactive dashboards using a D3.js-based client-server architecture, periodically querying the policy graph database 310 via RESTful API endpoints for the latest knowledge graph nodes, policy violations, and immutable ledger links. The dashboard displays node-link diagrams annotated with policy levels and violation statuses, temporal charts summarizing the frequency and nature of detected violations, and allows human operators to drill down into individual enforcement events or provide remediation input. User actions, such as policy overrides or acknowledgment of alerts, are logged for compliance traceability.

In one example, the feedback unit 210 incorporates an interactive feedback capture workflow, wherein human operators review detected policy violations via the visualization interface 122AN and submit structured feedback-approving, contesting, or annotating the machine-generated decision. The compliance module 112 applies the received feedback to adjust GAN compliance engine 308 parameters in real time, updating the discriminator's decision threshold and class weightings through online stochastic gradient descent. The policy enforcement system 102 incorporates safeguards to prevent malicious or low-quality input by cross-referencing feedback against historical operator reliability and consensus ratings, thus maintaining model robustness.

In one example, the network interface 212 is configured with secure message formatting adhering to MQTT over TLS, enabling the policy enforcement system 102 to deliver signed compliance notifications and cryptographic pointers to immutable ledger entries to an external compliance systems 124. Each message payload includes a violation identifier, machine tag list, severity score, and a blockchain transaction Uniform Resource Locator, authenticated with rotating keys. The industrial gateway controller 314 listens for policy violation synchronization signals and executes atomic configuration changes-such as updating programmable logic controller access control lists or closing data egress relays-within 50 milliseconds, thereby enforcing immediate policy-conformant data boundaries across the respective industrial automation boundary. Testing routines verify enforcement efficacy by replaying simulated policy breach scenarios, with detection latency and false positive/negative ratios logged for ongoing optimization.

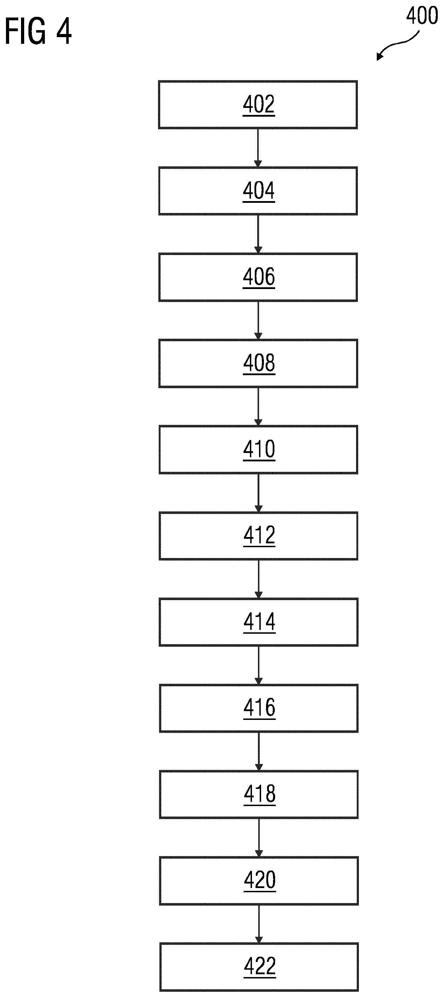

FIG 4 is a process flowchart illustrating an exemplary method of enforcing business-policy-driven data boundaries within an industrial automation environment, according to an embodiment of the present invention.

The method begins at step 402.

At step 402, the plurality of business policy documents and the plurality of data transmission logs are received from the industrial automation components 108 operating within the industrial automation environment 100.

At step 404, the knowledge graph is generated by applying a natural language processing model to the plurality of business policy documents and by mapping policy terms to technical tags, such that nodes and edges representing a plurality of policy elements, machine tags, and protocol endpoints are created.

At step 406, the synonym mapping is applied between business ontology nodes in the knowledge graph and machine tag nodes so that at least one cross-layer policy relationship is determined for enhanced violation detection.

At step 408, the immutable data path is generated by applying distributed ledger technology to the plurality of data transmission logs, and the immutable data path is merged into the knowledge graph as tamper-evident provenance information.

At step 410, the generative adversarial network compliance engine 308 is applied to the knowledge graph and the immutable data path in order to generate synthetic data-flow representations and to detect at least one policy violation according to one or more business policy boundaries.

At step 412, the plurality of field-level anomalies in the synthetic data-flow representations are detected by applying a convolutional neural network layer within the generative adversarial network compliance engine 308.

At step 414, at least one sequence-level transformation in the synthetic data-flow representations is detected by applying a recurrent neural network layer within the generative adversarial network compliance engine 308.

At step 416, transmission of at least one live data stream across an industrial automation boundary is controlled by applying an output from the generative adversarial network compliance engine 308, thereby ensuring that only data conforming to the business policy boundaries is transmitted.

At step 418, a visualization of at least one of the knowledge graph, the immutable data path, or the detected policy violation is output to a human-machine interface.

At step 420, an indication of the detected policy violation and the associated immutable data path is transmitted to the external compliance system 124 for archiving or enforcement.

At step 422, the detected policy violation is synchronized with the industrial gateway controller 314 to control at least one physical data egress operation at the industrial automation boundary.

Furthermore, user feedback regarding the detected policy violation is received and at least one parameter of the generative adversarial network compliance engine 308 is modified responsive to the received user feedback.

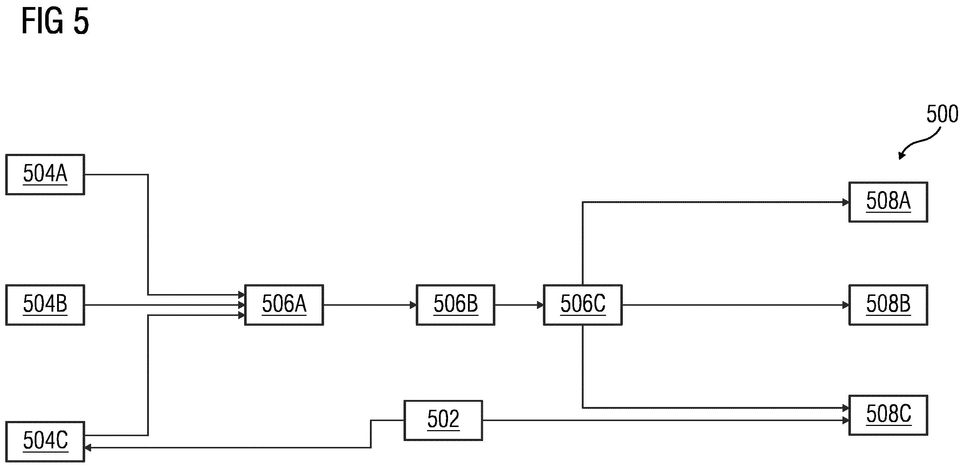

FIG. 5 illustrates an exemplary industrial automation environment 500 that implements policy-driven data boundary enforcement according to the present invention. Within the industrial automation environment 500, three industrial automation components are depicted as 504A, 504B, and 504C. The industrial automation components (504A, 504B, and 504C), such as programmable logic controllers, remote terminal units, or other field devices, are responsible for generating operational data. The data from the industrial automation components (504A, 504B, and 504C) is routed to the Ontological Gatekeeper 502 which enables advanced processing and policy compliance.

The ontological gatekeeper 502 receives business policy documents and data transmission logs originating from the industrial automation components 504A, 504B, and 504C. Using a natural language processing model, the ontological gatekeeper 502 produces a knowledge graph that translates business policies into enforceable technical rules, mapping policy terms to specific technical tags representing relevant devices and systems within the industrial automation environment 500. The ontological gatekeeper 502 also applies distributed ledger technology to data transmission logs, thus producing an immutable data path and embedding tamper-evident provenance information directly into the knowledge graph. The Ontological Gatekeeper 502 is able to assess compliance robustly and in real time. Additionally, the Ontological Gatekeeper 502 employs a generative adversarial network to synthesize and analyze variations of data flows, improving the policy enforcement system 102 ability to detect both known and previously unseen policy violations before allowing any data transmission to leave the industrial automation environment.

A sequence of application modules labeled App1 506A, App2 506B, and App3 506C is shown. Data flows through the sequence of applications after passing initial checks by the Ontological Gatekeeper 502. At each stage, data is further processed depending on a plurality of domain requirements, and the Ontological Gatekeeper 502 continues to monitor all transactions, ensuring ongoing compliance with mapped business policies. Upon detection of any policy violation at any application stage, the Ontological Gatekeeper 502 can prevent data propagation or generate an alert for further investigation.

Furthermore, the FIG. 5 depicts a plurality of external destinations (508A-m 508B, and 508C). A first external destination 508A represents offsite cloud-based services or storage, which only receives data after passing compliance analysis. A second external system 508B refers to a back-end enterprise server or information system, which can archive, monitor, or process policy-compliant data. A third external system 508C, or industrial personal computer, may serve as another gateway for external data flow or act as an enforcement point where data egress is tightly controlled by decisions made by the Ontological Gatekeeper 502.

Overall, the operational flow begins with data generated from the industrial automation components 504A, 504B, and 504C, which is then subjected to policy analysis and knowledge graph mapping by the Ontological Gatekeeper 502. After validation for compliance and security, the data advances through application modules 506A, 506B, and 506C, and ultimately is transferred to the plurality of external destinations, including the first 508A, the second 508B, or the third external system 508C. Any data that does not meet the relevant business policy boundaries is blocked, logged, or flagged, ensuring stringent enforcement at every stage. As illustrated in FIG. 5, this architecture for industrial automation environment 500 results in a comprehensive, Al-enhanced, and tamper-evident solution that secures and manages data flows in accordance with business directives.

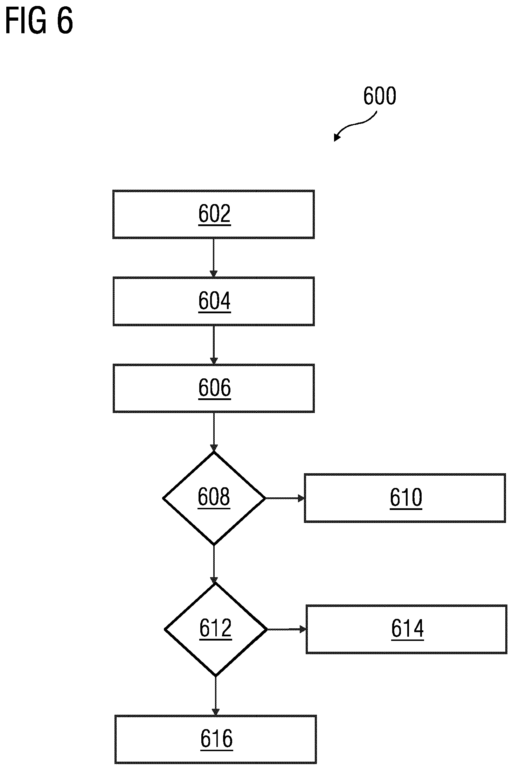

FIG. 6 is a process flow diagram illustrating the best mode of practicing a method for enforcing business policy-driven data boundaries within an industrial automation environment, described in conjunction with and inheriting all referenced elements and numerals from FIG. 1, FIG. 2, and FIG. 3. At step 602, the data ingestion component 302 of the policy enforcement system 102 initiates a secure API session-using, for example, REST API over TLS 1.2-to fetch the business policy document from a centralized document repository or from the enterprise's information-technology subnet. Incoming policy documents are persisted in a staging database within policy graph database 310 via a JSON schema with fields for policy ID, clause text, effective date, and compliance category, supporting rapid indexing and retrieval. A schema validation routine, implemented by processor(s) 202 using Python, ensures all required attributes are present, while SHA-256 checksums are computed to guarantee integrity and support ledger-based immutability through the immutable data path generator 306. In a real-world scenario, such as an automotive manufacturing plant, a "Data Export Restrictions.pdf" policy might be ingested nightly by data ingestion component 302, ensuring the latest governance is always enforced on the shop floor.

At step 604, the data ingestion component 302, in coordination with the knowledge graph engine 304, reads the relevant machine specification by identifying technical parameters and tag definitions associated with the target industrial automation component, such as a programmable logic controller (PLC) or smart sensor node (108A-N in FIG. 1). This retrieval is typically automated using advanced message queuing protocol (AMQP) or secure FTP, ingesting device manifests structured as YAML files with nested dictionaries describing device ID, supported protocol endpoints, tag names, allowable ranges, and update intervals. The knowledge graph engine 304 parses these files using a recursive-descent parser and stores the specifications in the policy graph database 310 as vertex nodes labeled "MachineTag" and "ProtocolEndpoint", with properties such as "name: Motor43.RPM", "protocol: OPC-UA", and "zone: PlantNetwork". For performance, hash indexing on tag names enables O(1) correlation between incoming events and policy-mapped nodes. In the beverage bottling use case, this might involve parsing the spec for "Freezer1.Temperature" on PLC-7, associating it with the freezer's control network subnet and sensor-calibrated range.

At step 606, the knowledge graph engine 304, driven by processor(s) 202, configures an actionable rule by semantically fusing the extracted business policy clauses from the policy document with the corresponding machine tag nomenclature and operational context pulled from the machine spec. This is achieved using a Transformer-based NLP model (such as a fine-tuned BERT pipeline) for entity extraction and context-aware synonym resolution (with synonym mapping component 316), and then mapping policy terms to technical tags via cosine similarity (thresholded at ≥0.83 using Word2Vec or Sentence-BERT). Resulting associations are stored in the policy graph as property-graph edges labeled "GOVERNS" or "RESTRICTS", connecting "PolicyElement" nodes to "MachineTag" nodes, along with confidence scores and last-update timestamps. Knowledge graph engine 304 employs Neo4j's driver's batch transaction interface to ensure configurational integrity when rules are re-evaluated due to process changes. For instance, a freezer temperature export policy's "confidential process data" label may be programmatically mapped to "PLC-7.Freezer1.Temp" with a GOVERNS edge, so that all flows of that tag are tagged as restricted by subsequent enforcement modules.

At step 608, the GAN compliance engine 308, integrated within the compliance module 112 and orchestrated by processor(s) 202, evaluates in real time whether a data policy is violated for any monitored data stream or message, based on live sensor data or batch-processed control records. This check is performed by synthesizing expected data-flows by sampling neighborhood vectors from the knowledge graph database 310 and immutable ledger statistics from the immutable data path generator 306, with the discriminator composed of three fully connected neural network layers outputting violation likelihood scores. All real-time data streams are tokenized by the monitoring engine 312 and reshaped into two-dimensional matrices (protocol fields × time) for the convolutional neural network (CNN) layer anomaly extraction, while recurrent LSTM layers within the GAN compliance engine 308 capture temporal manipulations in sequence. Computed violation events are buffered in a circular log (ring data structure) managed by processor(s) 202, ensuring all policy violations are detected within a sub-second window even under high load. In the automotive plant example, any data flow of "PLC-7.Freezer1.Temp" destined for a non-whitelisted endpoint would trigger the violation pathway if the policy prohibits such export.

If there is no data policy violation, the monitoring engine 312 proceeds to step 610, suppressing any user notification or enforcement action. The enforcement state and last rule evaluation outcome are nonetheless logged with a status code ("0:COMPLIANT") in an immutable audit trail managed by the immutable data path generator 306 (using Hyperledger Fabric chaincode transactions). Each event record includes the source device ID, event timestamp, outcome, and associated knowledge graph edge identifier, hashed to provide tamper-evident provenance, with additional buffering and notification queue management via feedback unit 210. In everyday operation, as seen in a beverage plant during normal workflows, compliant temperature readings-such as from the freezer when within bounds and egressing to approved analytics endpoints-will quietly transit the network without raising flags.

If the GAN compliance engine 308 flags a violation at step 608, the rule evaluator routine of the compliance module 112, drawing from JSON-based rule-set data structures stored in policy graph database 310 and employing a decision-tree or trie-based lookup algorithm, advances to step 612 to determine whether the configured rule specifies a "block" policy. Upon a block policy match, at step 614, the GAN compliance engine 308 generates an enforcement message object with severity "critical", tag list, violation context, and remediation instructions, which is committed to the immutable ledger via the immutable data path generator 306 and delivered over MQTT/TLS to the operator's visualization interface 122A-N. The monitoring engine 312 then executes the block by immediately updating access control lists in the industrial gateway controller 314 or issuing a firewall deny rule, as an atomic operation. In the automotive example, a violation involving an unauthorized attempt to export "Freezer1.Temp" (which is marked as confidential and block-listed) to a cloud analytics provider would result in immediate packet drop and a visual red alert for plant security staff.

If the violation does not correspond to a blocking rule, the GAN compliance engine 308 instructs the feedback unit 210 to issue a yellow flag warning at step 616, signaling a policy concern that requires operator attention but does not result in an outright block. The feedback unit 210 encodes the alert as a warning object (with policy-reference, device-ref, severity: "warning", and timestamp) and dispatches it to the visualization interface 122A-N, while the event is logged in the immutable data path and queued for operator review. Operator input through the visualization interface is then fed back to GAN compliance engine 308 and compliance module 112 via the feedback unit 210, initiating online stochastic gradient descent (SGD) routines to adjust future model thresholds, thereby enabling dynamic, contextual adjustment of enforcement sensitivity. In a real-world automotive plant, an unplanned spike in freezer temperature being sent to an internal historian outside operating hours might only trigger a yellow flag, prompting an engineering review while ensuring anomalous or suspicious flows are tracked for later compliance analysis.

In a best mode of practicing the present disclosure, the policy enforcement system 102, together with its key subsystems such as the data ingestion component 302, knowledge graph engine 304, GAN compliance engine 308, feedback unit 210, monitoring engine 312, and immutable data path generator 306, orchestrates all rule configuration, semantic mapping, violation detection, enforcement actions, and audit logging. These operations leverage advanced transformer-based NLP algorithms, property graph data models (Neo4j), deep-learning frameworks (CNN, LSTM), and distributed ledger data structures (Hyperledger Fabric) to provide real-time, context-sensitive enforcement of data boundaries aligned with evolving business policies and operational needs in complex industrial environments. This integrated system enables robust, auditable enforcement in real-world deployments, ensuring, for example, that sensitive process data such as freezer temperatures in an automotive plant are never inadvertently exported in violation of business policy, while supporting compliance transparency and rapid human response.

The present disclosure can take the form of a computer program product comprising program modules, such as instructions that implement a Synonym Mapping Component (316), a Policy Graph Database (310), a GAN Compliance Engine (308), a Knowledge Graph Engine (304), and an Industrial Gateway Controller (314), accessible from a computer-usable or computer-readable medium having stored program code for use by or in connection with one or more computers, processors, or instruction execution systems within a resource-constrained industrial edge device environment (102). For the purposes of this description, a computer-usable or computer-readable medium encompasses any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device), and includes non-transitory physical computer-readable media such as semiconductor or solid-state memory, magnetic tape, a removable computer diskette, random access memory (RAM), read-only memory (ROM), rigid magnetic disk and optical disk such as compact disk read-only memory (CD-ROM), compact disk read/write, and DVD. Both processing hardware and logic modules for implementing each aspect of the present technology-including policy compliance monitoring, semantic mapping between business policy and operational technology (OT) tags, immutable audit trail generation, distributed enforcement of policy at industrial gateways, and real-time anomaly detection within data flows-can be centralized within a single edge node or distributed across multiple components (or a combination thereof), as recognized by those skilled in the art.

While the present disclosure has been described in detail with respect to certain embodiments, it should be appreciated that the present disclosure is not limited to those embodiments. Modifications and variations may be conceived by those skilled in the art in view of this disclosure without departing from the scope of the various embodiments described herein. The scope of the present disclosure is indicated by the following claims rather than by the foregoing description, and all changes, modifications, and variations that come within the meaning and range of equivalency of the claims are to be considered within their scope. All advantageous embodiments claimed in method claims are likewise applicable to system and apparatus claims.

The described disclosure offers significant advantages over conventional industrial compliance and edge data governance technologies. By enabling the synonym mapping component (316) and knowledge graph engine (304) to dynamically align business policy terms with technical device tags and by empowering the GAN compliance engine (308) and industrial gateway controller (314) to enforce policy at the data egress boundary, the policy enforcement system 102 greatly reduces administrative complexity and ensures rigorous, traceable compliance throughout the industrial network. This targeted enforcement and semantic harmonization ensure that only policy-relevant data flows are permitted and logged, minimizing the risk of data leakage, reducing compliance burden, and enhancing operational resilience. The present disclosure also supports scalable semantic policy mapping and decentralized enforcement via secure message passing between edge nodes, allowing seamless adaptation as new devices, policies, or compliance requirements emerge without manual reconfiguration. Furthermore, the immutable data path generator (306) provides tamper-evident auditability for all compliance actions and mappings, making the solution especially well-suited for industrial internet-of-things (IIoT), smart manufacturing, and other mission-critical automation environments where regulatory assurance, traceability, and reliability are paramount.

### Reference Numbers List (with Description)

- **100:** Industrial automation environment
- **102:** Policy enforcement system
- **104:** Network (LAN, WAN, Wi-Fi, Internet, etc.)
- **106:** Industrial installation
- **108A-N / 108:** Industrial automation components (PLCs, robots, sensors, etc.)
- **110:** Platform (e.g., cloud computing platform)
- **112:** Compliance module / Compliance module within the enforcement system
- **114:** Server (including hardware resources and OS)
- **116:** Network interface (within enforcement system)
- **118:** Policy graph database
- **120A-N / 120:** Client devices (desktop, laptop, tablet, etc.)
- **122A-N / 122:** Visualization interface (human-machine interface on client device)
- **124:** External compliance system

### FIG. 2 (Policy enforcement system block diagram)

- **202:** Processor(s)
- **204:** Memory
- **206:** Storage unit
- **208:** Communication interface
- **210:** Feedback unit
- **212:** Network interface (hardware)
- **214:** Bus
- **216:** source code

### FIG. 3 (Compliance module block diagram)

- **302:** Data ingestion component
- **304:** Knowledge graph engine
- **306:** Immutable data path generator
- **308:** Generative adversarial network (GAN) compliance engine
- **310:** Policy graph database (within compliance module)
- **312:** Monitoring engine
- **314:** Industrial gateway controller
- **316:** Synonym mapping component

### FIG. 4 (Process flowchart)

- **402:** Step - Receive policy documents & logs
- **404:** Step - Generate knowledge graph
- **406:** Step - Apply synonym mapping
- **408:** Step - Generate immutable data path
- **410:** Step - Apply GAN for detection
- **412:** Step - Detect field-level anomalies (CNN)
- **414:** Step - Detect sequence-level transformation (RNN)
- **416:** Step - Control live data stream transmission
- **418:** Step - Output visualization
- **420:** Step - Transmit violation indication externally
- **422:** Step - Synchronize violation with gateway controller

### FIG. 5 (Exemplary automation environment and enforcement flow)

- **500:** Industrial automation environment (exemplary)
- **502:** Ontological Gatekeeper
- **504A, 504B, 504C:** Industrial automation components (e.g., PLC, RTU, devices)
- **506A, 506B, 506C:** Application modules (App1, App2, App3)
- **508A:** First external destination (e.g., offsite cloud)
- **508B:** Second external system (back-end server/information system)
- **508C:** Third external system (industrial PC or other gateway)

### FIG. 6 (Process flow best mode)

- **602:** Step - Ingest policy document
- **604:** Step - Read machine specification
- **606:** Step - Configure actionable rule
- **608:** Step - Evaluate policy violation (GAN)
- **610:** Step - Log compliant event/no action
- **612:** Step - Check for block policy on violation
- **614:** Step - Execute enforcement/block, send alert
- **616:** Step - Warning/alert (without block), log and feedback

## Claims

1. A computer-implemented method for enforcing business policy-driven data boundaries within an industrial automation environment (100), the method comprising:
receiving a plurality of business policy documents and a plurality of data transmission logs from a plurality of industrial automation components (108A-N);
generating a knowledge graph by applying a natural language processing model to the plurality of business policy documents and mapping policy terms to technical tags, wherein the knowledge graph comprises a plurality of nodes and edges representing a plurality of policy elements, a plurality of machine tags, and a plurality of protocol endpoints;
generating an immutable data path by applying distributed ledger technology to the plurality of data transmission logs, wherein the immutable data path is merged into the knowledge graph as tamper-evident provenance information;
applying a generative adversarial network model using the knowledge graph and the immutable data path as input to generate a plurality of synthetic data-flow representations and to detect at least one policy violation according to one or more business policy boundaries; and
controlling transmission of at least one live data stream across an industrial automation boundary by applying an output from the generative adversarial network model, such that only data conforming to the one or more business policy boundaries is transmitted.

2. The method of claim 1, further comprising:
detecting a plurality of field-level anomalies in the plurality of synthetic data-flow representations by applying a convolutional neural network layer within the generative adversarial network model.

3. The method of any of claims 1 and 2, further comprising:
detecting at least one sequence-level transformation in the plurality of synthetic data-flow representations by applying a recurrent neural network layer within the generative adversarial network model.

4. The method of any of claims 1 to 3, further comprising:
applying a synonym mapping between a plurality of business ontology nodes in the knowledge graph and a plurality of machine tag nodes to determine at least one cross-layer policy relationship for enhanced violation detection (316).

5. The method of any of claims 1 to 4, further comprising:
receiving user feedback regarding the at least one detected policy violation and modifying at least one parameter of the generative adversarial network model responsive to the received user feedback.

6. The method of any of claims 1 to 5, further comprising:
outputting a visualization of at least one of the knowledge graph, the immutable data path, or the at least one detected policy violation to a human-machine interface.

7. The method of claim 1, further comprising:
transmitting an indication of the at least one detected policy violation and an associated immutable data path to at least one external compliance system (124) for archiving or enforcement.

8. The method of claim 1, further comprising:
synchronizing the at least one detected policy violation with at least one industrial gateway controller (314) to control at least one physical data egress operation at the respective industrial automation boundary.

9. A system for enforcing business policy-driven data boundaries within an industrial automation environment (100), comprising:
a data ingestion component (302) configured to receive a plurality of business policy documents and a plurality of data transmission logs from a plurality of industrial automation components (108A-N);
a knowledge graph engine (304) configured to generate a knowledge graph comprising a plurality of nodes representing a plurality of policy elements, a plurality of machine tags, and a plurality of protocol endpoints by applying a natural language processing model to the received plurality of business policy documents and mapping policy terms to technical tags;
an immutable data path generator (306) configured to apply distributed ledger technology to the received plurality of data transmission logs, wherein the immutable data path is merged within the knowledge graph as tamper-evident provenance information;
a generative adversarial network compliance engine (308) configured to receive the knowledge graph and the immutable data path as input, to generate a plurality of synthetic data-flow representations, and to detect at least one policy violation according to one or more business policy boundaries;
and a monitoring engine (312) configured to control transmission of at least one live data stream across an industrial automation boundary by applying an output from the generative adversarial network compliance engine (308), such that only data conforming to the one or more business policy boundaries is transmitted.

10. The system of claim 9, further comprising:
a convolutional neural network layer within a compliance module (112) configured to detect a plurality of field-level anomalies in the plurality of synthetic data-flow representations.

11. The system of any of claims 9 and 10, further comprising:
a recurrent neural network layer within the compliance module (112) configured to detect at least one sequence-level transformation in the plurality of synthetic data-flow representations.

12. The system of any of claims 9 to 11, further comprising:
a synonym mapping component (316) configured to apply a synonym mapping between a plurality of business ontology nodes in the knowledge graph and a plurality of machine tag nodes to determine at least one cross-layer policy relationship.

13. The system of any of claims 9 to 12, further comprising:
a feedback unit (210) configured to receive user feedback regarding the at least one detected policy violation and to modify at least one parameter of a generative adversarial network in the compliance module (112).

14. The system of any of claims 9 to 13, further comprising:
a visualization interface (122A-N) configured to display at least one of the knowledge graph, the immutable data path, or the at least one detected policy violation to a human operator.

15. The system of any of claims 9 to 14, further comprising:
an industrial gateway controller (314) configured to synchronize with the monitoring engine (312) to control at least one physical data egress operation at the industrial automation boundary, responsive to the at least one detected policy violation.
